# EUROPEAN PATENT SPECIFICATION

(11) **EP 2 780 162 B1**
(45) Date of publication and mention of the grant of the patent: **06.06.2018**
(21) Application number: 12848820.2
(22) Date of filing: 16.11.2012
(51) Int. Cl.: B32B 27/06, B32B 27/18, B32B 17/10, B32B 27/12, B32B 27/28, B32B 27/30, B32B 27/32, B32B 27/34, B32B 27/36, B32B 19/02, B32B 19/04, B32B 19/06, A62C 2/06, A62C 3/08, B32B 37/12, B32B 37/02, B32B 37/14, B32B 38/08, B32B 38/00

(54) **FIRE BARRIER LAYER AND FIRE BARRIER FILM LAMINATE**
FEUERHEMMENDE SCHICHT UND FEUERHEMMENDES FILMLAMINAT
COUCHE BARRIÈRE AU FEU ET STRATIFIÉ À FILM DE BARRIÈRE AU FEU

(30) Priority: 18.11.2011 US 201113299387
(43) Date of publication of application: 24.09.2014
(73) Proprietor: Unifrax I LLC, Tonawanda, NY 14150 (US)
(72) Inventor: FERNANDO, Joseph A., Amherst New York 14228 (US); GARVEY, Chad E., Lewiston New York 14092 (US); RIOUX, Robert, Amherst New York 14228 (US); MILLER, Kenneth B., Lockport New York 14094 (US)
(74) Representative: Keller, Günter
(86) International application number: PCT/US2012/065591
(87) International publication number: WO 2013/074968

(56) References cited:
- EP-A1- 1 164 006
- WO-A1-02/32663
- WO-A1-2008/136875
- WO-A1-2010/123771
- WO-A2-2011/133778
- US-A- 5 100 724
- US-A- 5 326 500
- US-A- 5 344 697
- US-A- 5 384 188
- US-A1- 2006 046 598
- US-A1- 2007 155 265
- US-A1- 2008 166 937
- US-A1- 2010 209 679
- US-B1- 6 670 291

## Description

A fire barrier laminate is provided for use in thermal and acoustical insulation systems, such as, but not limited to, those used in commercial aircraft.

WO 2008/136875 discloses a fire-blocking paper which maybe incorporated into a fire-barrier film laminate for use in thermal and acoustical insulation systems, whereby the fire-blocking paper comprises about 60 to about 74 wt.% bio-soluble alkaline earth silicate fibers.

US 5,326,500 discloses a vermiculite particulate composition which can be used for the formation of coatings.

WO 02/32663 is directed to a laminate comprising a polymeric material and non-metallic fibers.

WO 2011/133778 discloses a multilayer thermal insulation comprising fibrous insulation, a heat absorbing material and a superinsulation layer.

The Federal Aviation Administration (FAA) has promulgated regulations, contained in 14 C.F.R. § 25.856(a) and (b), requiring thermal and acoustical insulation blanket systems in commercial aircraft to provide improved burn through protection and flame propagation resistance. These conventional thermal and acoustical insulation systems typically include thermal and acoustical insulation blankets encapsulated within a film covering or bag. As the thermal and acoustical insulation systems are conventionally constructed, the burn through regulations primarily affect the contents of the insulation systems' bags and the flame propagation resistance regulations primarily affect the film coverings used to fabricate the bags. Conventional film coverings typically are used as a layer or covering, for example, laid over or laid behind layers of thermal and acoustical insulation material, or as a covering or bag for partially or totally encapsulating one or more layers of thermal and acoustical insulation material.

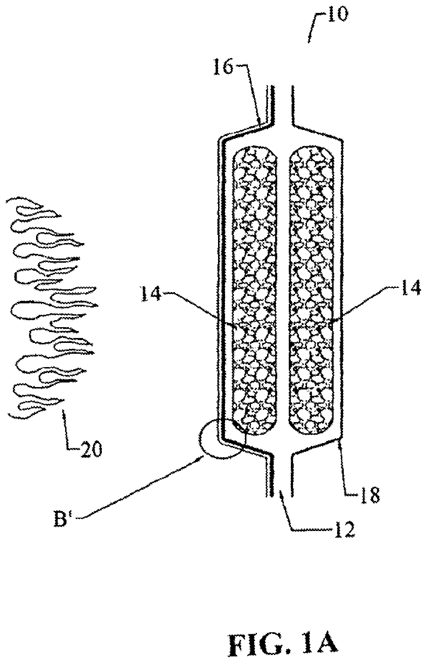

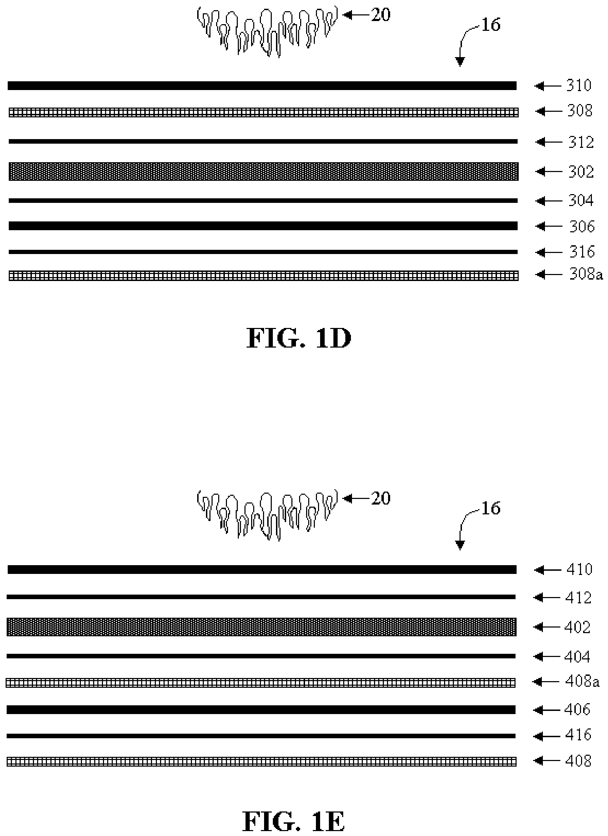

FIG. 1A is a schematic cross-sectional view of a thermal and acoustical aircraft insulation blanket protected by an embodiment of the subject fire barrier laminate.

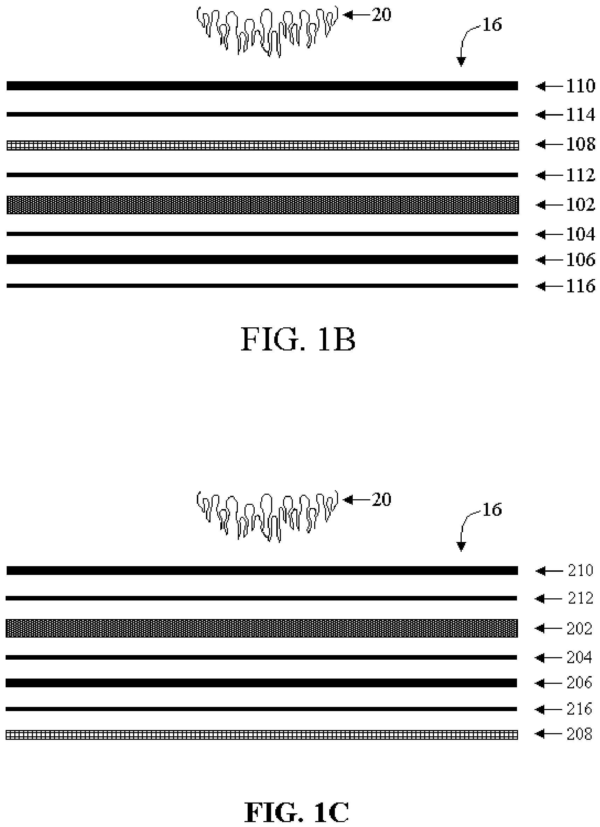

FIG. 1B is an exploded cross-sectional view of the subject fire barrier laminate circled portion B' of the embodiment of FIG. 1A.
FIG. 1C is an exploded cross-sectional view of another illustrative embodiment of the subject fire barrier laminate circled portion B' of the embodiment of FIG. 1A.
FIG. 1D is an exploded cross-sectional view of a further illustrative embodiment of the subject fire barrier laminate circled portion B' of the embodiment of FIG. 1A.
FIG. IE is an exploded cross-sectional view of a further illustrative embodiment of the subject fire barrier laminate circled portion B' of the embodiment of FIG. 1A.

A fire barrier layer is provided which is incorporated into a fire barrier laminate for use in thermal and acoustical insulation systems, such as, but not limited to, those used in commercial aircraft. By way of example, but not limitation, the fire barrier laminate may be used as a covering that is located between insulation material in fuselage wall cavities and the outer skin of an aircraft fuselage (as an outboard cover of an insulation system) and/or between insulation material in fuselage wall cavities and the interior aircraft trim panels (as an inboard cover of an insulation system).

The incorporation of the subject fire barrier layer in a fire barrier laminate, used for protecting thermal and acoustical insulation structures, solves problems previously associated with the use of lightweight ceramic or inorganic papers, which tend to be fragile to handling or in use where harsh mechanical environments are encountered.

In certain embodiments, the subject fire barrier film laminate comprises at least one fire barrier layer coated onto at least one film layer, optionally a water-repellant material incorporated into and/or applied to the fire barrier layer, at least one scrim layer, at least one second film layer, and optionally at least one adhesive layer, the fire barrier layer comprising inorganic fibers, at least one inorganic platelet material, optionally at least one organic binder and/or inorganic binder, and optionally at least one functional filler.

In certain embodiments, the fire barrier laminate comprises: at least one fire barrier layer directly or indirectly coated onto at least one first polymeric flame propagation resistant film layer; at least one second film layer proximate to the fire barrier layer opposite the first polymeric flame propagation resistant film layer; at least one scrim layer disposed: (i) between the fire barrier layer and the first polymeric flame propagation resistant film layer; and/or (ii) between the fire barrier layer and the second film layer; and/or (iii) proximate to the first polymeric flame propagation resistant film layer opposite the fire barrier layer; and/or (iv) proximate to the second film layer opposite the fire barrier layer; optionally, a water-repellant material incorporated into and/or applied to the fire barrier layer; optionally at least one adhesive layer adhering the fire barrier layer to the first polymeric flame propagation resistant film layer; and optionally at least one adhesive layer adhering the scrim layer to at least one of the fire barrier layer, the first polymeric flame propagation resistant film layer, or the second film layer; wherein the fire barrier layer comprises inorganic fibers, at least one inorganic platelet material, optionally at least one organic binder and/or inorganic binder, and optionally at least one functional filler. Optionally, the second film layer may be flame propagation resistant.

By indirectly coating, it is meant that the fire barrier layer may be coated onto an intermediate layer, such as a scrim, wherein the intermediate layer is engaged with the first polymeric flame propagation resistant film layer. The intermediate layer may be engaged with the first polymeric flame propagation resistant film layer before or after being coated with the fire barrier layer.

This composition provides a light basis weight article with surprising resistance to damage associated with handling and use along with the ability to resist flame propagation and flame penetration as defined in 14 C.F.R. § 25.856(a) and (b). The term "basis weight" is defined as the weight per unit area, typically defined in grams per square meter (gsm). The subject fire barrier layer, and the laminate incorporating it, are therefore useful in providing fire burn-through protection for thermal and acoustical insulation structures, referred to in the industry as "blankets", for commercial aircraft fuselages, as the subject fire barrier laminate may have a basis weight of between about 80 gsm to about 120 gsm, and in certain embodiments between about 90 gsm to about 110 gsm.

The inorganic fibers of the fire barrier layer may comprise at least one of inorganic biosoluble fibers, refractory ceramic fibers, non-respirable glass fibers. The inorganic fibers may be included in the fire barrier layer in an amount from about 2 to about 50 weight percent, in certain embodiments from about 2 to about 40 weight percent, in further embodiments from about 2 to about 30 weight percent, in still further embodiments from about 2 to about 20 weight percent, and in other embodiments from about 2 to about 10 weight percent, based on the total weight of the fire barrier layer.

An illustrative example of the inorganic bio-soluble fiber includes, but is not limited to, ISOFRAX® alkaline earth silicate (AES) fibers, having an average diameter of between about 0.6 microns and about 2.6 microns.

An illustrative example of the refractory ceramic micro fibers include, but is not limited to, FIBERFRAX® refractory aluminosilicate ceramic fibers (RCF), available from Unifrax I LLC, Niagara Fall, New York.

Additionally, borosilicate and high silica content fibers capable of resisting 1100°C temperatures without loss of structural integrity may also be used.

The term "bio-soluble" inorganic fibers refers to fibers that are decomposable is a physiological medium or in a simulated physiological medium such as simulated lung fluid. The solubility of the fibers may be evaluated by measuring the solubility of the fibers in a simulated physiological medium over time. A method for measuring the biosolubility (i.e.-the non-durability) of the fibers in physiological media is disclosed U.S. Patent No. 5,874,375 assigned to Unifrax I LLC, although other methods are also suitable for evaluating the biosolubility of inorganic fibers.

Without limitation, suitable examples of bio-soluble inorganic fibers that can be used to prepare the fire-blocking paper include those bios-oluble inorganic fibers disclosed in U.S. Patent Nos. 6,953,757, 6,030,910, 6,025,288, 5,874,375, 5,585,312, 5,332,699, 5,714,421, 7,259,118, 7,153,796, 6,861,381, 5,955,389, 5,928,975, 5,821,183, and 5,811,360.

The bio-soluble alkaline earth silicate fibers may comprise the fiberization product of a mixture of oxides of magnesium and silica, commonly referred to as magnesium-silicate fibers. The magnesium-silicate fibers generally comprise the fiberization product of about 60 to about 90 weight percent silica, from greater than 0 to about 35 weight percent magnesia and 5 weight percent or less impurities. According to certain embodiments, the alkaline earth silicate fibers comprise the fiberization product of about 65 to about 86 weight percent silica, about 14 to about 35 weight percent magnesia, 0 to about 7 weight percent zirconia and 5 weight percent or less impurities. According to other embodiments, the alkaline earth silicate fibers comprise the fiberization product of about 70 to about 86 weight percent silica, about 14 to about 30 weight percent magnesia, and 5 weight percent or less impurities. A suitable magnesium-silicate fiber is commercially available from Unifrax I LLC (Niagara Falls, New York) under the registered trademark ISOFRAX. Commercially available ISOFRAX® fibers generally comprise the fiberization product of about 70 to about 80 weight percent silica, about 18 to about 27 weight percent magnesia and 4 weight percent or less impurities.

Alternatively or additionally, the bio-soluble alkaline earth silicate fibers may comprise the fiberization product of a mixture of oxides of calcium, magnesium and silica. These fibers are commonly referred to as calcia-magnesia-silicate fibers. The calcia-magnesia-silicate fibers generally comprise the fiberization product of about 45 to about 90 weight percent silica, from greater than 0 to about 45 weight percent calcia, from greater than 0 to about 35 weight percent magnesia, and 10 weight percent or less impurities. Suitable calcia-magnesia-silicate fibers are commercially available from Unifrax I LLC (Niagara Falls, New York) under the registered trademark INSULFRAX. INSULFRAX® fibers generally comprise the fiberization product of about 61 to about 67 weight percent silica, from about 27 to about 33 weight percent calcia, and from about 2 to about 7 weight percent magnesia. Other commercially available calcia-magnesia-silicate fibers comprise about 60 to about 70 weight percent silica, from about 25 to about 35 weight percent calcia, from about 4 to about 7 weight percent magnesia, and trace amounts of alumina; or, about 60 to about 70 weight percent silica, from about 16 to about 22 weight percent calcia, from about 12 to about 19 weight percent magnesia, and trace amounts of alumina.

Refractory ceramic fiber (RCF) typically comprises alumina and silica. A suitable alumino-silicate ceramic fiber is commercially available from Unifrax I LLC (Niagara Falls, New York) under the registered trademark FIBERFRAX. The FIBERFRAX® ceramic fibers comprise the fiberization product of a melt comprising from about 45 to about 75 weight percent alumina and from about 25 to about 55 weight percent silica. The FIBERFRAX ®fibers exhibit operating temperatures of up to about 1540°C and a melting point up to about 1870°C. In certain embodiments, the alumino-silicate fiber may comprise from about 40 weight percent to about 60 weight percent Al₂O₃ and from about 60 weight percent to about 40 weight percent SiO₂, and in some embodiments, from about 47 to about 53 weight percent alumina and from about 47 to about 53 weight percent silica.

The RCF fibers are a fiberization product that may be blown or spun from a melt of the component materials. RCF may additionally comprise the fiberization product of alumina, silica and zirconia, in certain embodiments in the amounts of from about 29 to about 31 percent by weight alumina, from about 53 to about 55 percent by weight silica, and from about 15 to about 17 weight percent zirconia. RCF fiber length is in certain embodiments, in the range of from about 3 mm to 6.5 mm, typically less than about 5 mm, and the average fiber diameter range is from about 0.5 µm to about 14µm.

Non-respirable glass fibers may include S2 glass fibers, E-glass fibers, and the like. Organic reinforcing fibers may include, but not be limited to, aromatic polyamide, such as aramid fibers or fibrids, such as KEVLAR® fibers or fibrids, NOMEX® fibers or fibrids, and polyacrylonitrile fibers or fibrids.

Organic binders that may be used may include, but are not limited to, acrylic, styrene-butadiene, nitrile, polyvinylchloride, silicone, polyvinylacetate, or polyvinylbutyrate latexes. The inorganic binder or filler may include, but not be limited to, crushed inorganic or ceramic fiber, fumed silica, and the like.

The inorganic platelet material of the fire barrier layer may comprise at least one of vermiculite, mica, clay or talc. While any size inorganic platelet material may be used, inorganic platelet materials with larger relative diameters and high diameter to thickness aspect ratios may be desirable due to their increased flame propagation and/or bumthrough resistance performance, as well as other properties such as flexibility and processibility. In certain embodiments, the inorganic platelet material may have a diameter of from about 20 µm to about 300 µm. In further embodiments, the inorganic platelet material may have a diameter of from about 40 µm to about 200 µm. In certain embodiments, the inorganic platelet material may have an aspect ratio of from about 50:1 to about 2000:1. In certain embodiments, the inorganic platelet material may have an aspect ratio of from about 50:1 to about 1000:1. In further embodiments, the inorganic platelet material may have an aspect ratio of from about 200:1 to about 800:1.

The vermiculite or mica may be exfoliated, and may further be defoliated. By exfoliation, it is meant that the vermiculite or mica is chemically or thermally expanded. By defoliation, it is meant that the exfoliated vermiculite or mica is processed in order to reduce the vermiculite or mica to substantially a platelet form. Vermiculite may be included in the fire barrier layer in an amount from about 20 to about 98 weight percent, based on the total weight of the fire barrier layer.

Suitable micas may include, without limitation, muscovite, phlogopite, biotite, lepidolite, glauconite, paragonite and zinnwaldite, and may include synthetic micas such as fluorophlogopite. Mica may be included in the fire barrier layer in an amount from about 20 to about 98 weight percent, based on the total weight of the fire barrier layer.

Suitable platelet clay materials that may be included in the fire barrier layer include, without limitation, ball clay, bentonite, smectite, hectorite, kaolinite, montmorillonite, saponite, sepiolite, sauconite, or combinations thereof. Platelet clay materials may be included in the fire barrier layer in an amount from about 5 to about 60 weight percent, in certain embodiments from about 5 to about 50 weight percent, based on the total weight of the fire barrier layer.

The mica, vermiculite and/or clay platelet materials may also be combined with further platelet materials, such as talc. If present, talc may be included in the fire barrier layer in an amount from about 1 to about 50 weight percent, in certain embodiments, from about 10 to about 30 weight percent, based on the total weight of the fire barrier layer.

The fire barrier layer may include inorganic binders. Without limitation, suitable inorganic binders include colloidal dispersions of alumina, silica, zirconia, and mixtures thereof. The inorganic binders, if present, may be used in amounts ranging from 0 to about 40 percent by weight, in some embodiments from 0 to about 20 weight percent, based upon the total weight of the fire barrier layer.

The fire barrier layer may further include one or more organic binders. The organic binder(s) may be provided as a solid, a liquid, a solution, a dispersion, a latex, or similar form. Examples of suitable organic binders include, but are not limited to, acrylic latex, (meth)acrylic latex, phenolic resins, copolymers of styrene and butadiene, vinylpyridine, acrylonitrile, copolymers of acrylonitrile and styrene, vinyl chloride, polyurethane, copolymers of vinyl acetate and ethylene, polyamides, organic silicones, organofunctional silanes, unsaturated polyesters, epoxy resins, polyvinyl esters (such as polyvinylacetate or polyvinylbutyrate latexes) and the like.

The organic binder, if present, may be included in the fire barrier layer in an amount of from 0 to about 40 weight percent, in some embodiments from 0 to about 20 weight percent, based upon the total weight of the fire barrier layer.

Solvents for the binders, if needed, can include water or a suitable organic solvent, such as acetone, for the binder utilized. Solution strength of the binder in the solvent (if used) can be determined by conventional methods based on the binder loading desired and the workability of the binder system (viscosity, solids content, etc.).

In certain embodiments, the fire barrier layer may comprise from about 2% to about 50% by weight of the inorganic fibers, from about 20% to about 98% by weight of the inorganic platelet material, from 0% to about 40% by weight of the organic binder and/or inorganic binder, and from 0% to about 50% of the functional filler.

In further embodiments, the fire barrier layer may comprise from about 2% to about 40% of the inorganic fibers, from about 60% to about 98% by weight of the inorganic platelet material, from 0% to about 20% by weight of the organic binder and/or inorganic binder, and from 0% to about 20% of the functional filler.

In certain embodiments, the fire barrier layer may comprise from about 2% to about 30% by weight of the inorganic fibers, from about 20% to about 98% by weight of the inorganic platelet material, from 0% to about 40% by weight of the organic binder and/or inorganic binder, and from 0% to about 50% of the functional filler.

In certain embodiments, the fire barrier layer may comprise from about 2% to about 20% by weight of the inorganic fibers, from about 20% to about 98% by weight of the inorganic platelet material, from 0% to about 40% by weight of the organic binder and/or inorganic binder, and from 0% to about 50% of the functional filler.

In certain embodiments, the fire barrier layer may comprise from about 2% to about 10% by weight of the inorganic fibers, from about 20% to about 98% by weight of the inorganic platelet material, from 0% to about 40% by weight of the organic binder and/or inorganic binder, and from 0% to about 50% of the functional filler.

The fire barrier film laminate and/or the fire barrier layer may additionally comprise a water repellant additive or coating. The water repellant additive or coating may be a component of the fire barrier layer or may be a distinct coating or layer within the fire barrier film laminate, or may be saturated or impregnated into the fire barrier layer. The water repellant additive may alternatively or additionally be present in the adhesives which may be utilized in the subject fire barrier laminate. Without limitation, the water repellant additive or coating may comprise a water repellant silicone; a metal chloride salt such as calcium chloride, magnesium chloride, sodium chloride, potassium chloride, or aluminum chloride; silane; fluorinated compounds or fluorosurfactants such as polytetrafluoroethylene resin; polymeric wet strength resins such as polyamide resin or polyamide-epichlorohydrin resin; mixtures thereof, and the like.

The functional filler(s) may include, but not be limited to, non-platelet clays (such as attapulgite, kyanite, palygorskite, silimanite, or andalucite), fumed silica, boron nitride, cordierite and the like. According to certain embodiments, the functional fillers may include finely divided metal oxides, which may comprise at least one of pyrogenic silicas, arc silicas, low-alkali precipitated silicas, fumed silica, silicon dioxide aerogels, aluminum oxides, titania, calcia, magnesia, potassia, and mixtures thereof.

In certain embodiments, the functional filler may comprise endothermic fillers such as alumina trihydrate, magnesium carbonate, and other hydrated inorganic materials including cements, hydrated zinc borate, calcium sulfate (gypsum), magnesium ammonium phosphate, magnesium hydroxide and combinations thereof. In further embodiments, the functional filler(s) may include lithium-containing minerals. In still further embodiments, the functional fillers(s) may include fluxing agents and/or fusing agents.

In certain embodiments, the functional filler may comprise fire retardant fillers such as antimony compounds, magnesium hydroxide, hydrated alumina compounds, borates, carbonates, bicarbonates, inorganic halides, phosphates, sulfates, organic halogens or organic phosphates.

The fire barrier layer may be directly or indirectly coated onto a film, for example, without limitation, by roll or reverse roll coating, gravure or reverse gravure coating, transfer coating, spray coating, brush coating, dip coating, tape casting, doctor blading, slot-die coating, or deposition coating. In certain embodiments, the fire barrier layer is coated onto the film as a slurry of the ingredients in a solvent, such as water, and is allowed to dry prior to incorporation into the fire barrier laminate. The fire barrier layer may be created as a single layer or coating, thus utilizing a single pass, or may be created by utilizing multiple passes, layers or coatings. By utilizing multiple passes, the potential for formation of defects in the fire barrier layer is reduced. If multiple passes are desired, the second and possible subsequent passes may be formed onto the first pass while the first pass is still substantially wet, i.e. prior to drying, such that the first and subsequent passes are able to form a single unitary fire barrier layer upon drying.

When multiple passes, layers or coatings of the fire barrier layer are utilized, it is possible to vary the amounts of the ingredients in each pass, layer or coating, such that the passes, layers or coatings may have different amounts of, for example, inorganic platelet material. In certain embodiments, at least one pass, layer or coating having a greater amount of inorganic platelet material may be present on the "hot face" of the fire barrier layer. Further, in certain embodiments another pass, layer or coating may have a greater amount of functional filler in order to reduce the amount of defects present in the pass, layer or coating, and may have a greater ability to correct defects present in a previous pass, layer or coating.

In certain embodiments, the fire barrier layer may be directly or indirectly coated onto a first polymeric flame propagation resistant film, such as but not limited to polyesters, polyimides, polyetherketones, polyetheretherketones, polyvinylfluorides, polyamides, polytetrafluoroethylenes, polyaryl sulfones, polyester amides, polyester imides, polyethersulfones, polyphenylene sulfides, combinations thereof, and the like. Commercially available examples of these films are films sold by E.I. DuPont de Nemours & Co. of Wilmington, Del., such as a polyester film sold under the trade designation MYLAR®, a polyvinylfluoride film sold under the trade designation TEDLAR®, and a polyimide film sold under the trade designation KAPTON®, a polyetheretherketone film sold under the trade designation APTIV® by Victrex, plc of Lancashire, UK, a polyetheretherketone film sold under the trade designation KETASPIRE® by Solvay SA of Brussels, Belgium, and the like. The first polymeric flame propagation resistant film may be metalized to minimize moisture absorption, particularly on the outboard side, but optionally on the inboard side also.

In certain embodiments, the first polymeric flame propagation resistant film and/or the metalized first polymeric flame propagation resistant film may have an opaque, low-gloss polymer coating, optionally containing a fire retardant additive. The fire retardant additives may comprise at least one of antimony compounds, hydrated alumina compounds, borates, carbonates, bicarbonates, inorganic halides, phosphates, sulfates, organic halogens or organic phosphates.

The fire barrier laminate may additionally include an adhesive on one of the outer surfaces to facilitate thermal or other energetic bonding of the laminate to companion backside films as currently practiced in the fabrication of thermal acoustic insulation blankets to form a covering, bag, or envelope for the insulation layers. In some embodiments, a partially or substantially totally encapsulated insulation system is formed. (Air holes may be employed to accommodate pressure variation during flight.) In certain embodiments, the adhesive comprises an adhesive which is activated by the application of ultrasonic or radio frequency energy, or the like.

Optionally, at least one scrim layer may be disposed within the adhesive or a surface adjacent to an adhesive on at least one side of, or within, the fire barrier laminate, in order to, for example, add strength to the laminate, including puncture or tear resistance. In certain embodiments, a scrim may be disposed between the at least one fire barrier layer and the first polymeric flame propagation resistant film layer, such that the fire barrier layer may be coated indirectly onto the flame propagation resistant film layer by coating the fire barrier layer onto the scrim. The scrim may be in the form of a mesh, and may comprise fiberglass, nylon, polyester (such as aromatic polyester), aramid (such as para-aramid), or high or ultra-high molecular weight polyethylene in various embodiments, or may be absent.

The fire barrier laminate may additionally include adhesives, internal to the fire barrier laminate, which are utilized to laminate or otherwise adhere the layers of the fire barrier laminate to one another. These adhesives may include thermally-activated or pressure-based adhesives. The adhesives may comprise at least one of polyester based adhesives or polyvinyl fluoride based adhesives, and/or silicone adhesives. In certain embodiments, the adhesives may contain fire retardant additives. The fire retardant additives may comprise at least one of antimony compounds, hydrated alumina compounds, borates, carbonates, bicarbonates, inorganic halides, phosphates, sulfates, organic halogens or organic phosphates.

As shown in Fig. 1A, an embodiment of a thermal acoustic insulation system 10, or "blanket", is depicted in cross-section, in which two insulating layers 14, such as one inch thick MICROLITE AA® Premium NR fiberglass insulation (0.42 pcf) (available from Johns Manville International, Inc.), are disposed within a covering of an exteriorly facing fire barrier laminate 16, and an interiorly facing inboard cover film 18 (optionally, a second fire barrier laminate). The insulating layers 14 may also or alternatively comprise polyimide foam insulation. The exteriorly facing laminate 16 and the inboard film 18 may be heat sealed with an adhesive 12 to partially or substantially totally envelop or encapsulate the fiberglass insulation layers. Flames 20, depicting the FAA test procedures, are shown proximate to the exteriorly facing fire barrier laminate 16.

A detail section of an embodiment of the fire barrier laminate 16, encircled as B' in Fig. 1A is shown in an exploded cross-sectional view in Fig. IB. The fire barrier laminate 16 is constructed by first applying an adhesive 104 to a first polymeric flame propagation resistant film 106, such as a polyetheretherketone film. The fire barrier layer 102 is then coated onto the adhesive 104-coated first polymeric film 106. Alternatively, the adhesive 104 may be omitted, resulting in the fire barrier layer 102 being coated directly onto the first polymeric film 106. The fire barrier layer 102 may comprise a paste or slurry type material with an amount of water or other solvent being present in the fire barrier layer 102 as it is being coated onto the first polymeric film 106. In this instance, the fire barrier layer 102 is allowed to dry before continued processing. Optionally, a water-repellant material may be incorporated in, coated onto or saturated/impregnated into the fire barrier layer 102.

Separately, a scrim layer 108, such as a fiberglass or nylon scrim, is laminated to a second film 110, such as a polyetheretherketone film, using an adhesive 114. An adhesive 112 is also used to laminate the fire barrier layer 102-coated first polymeric film 106 to the scrim layer 108. Alternatively, the scrim layer 108 may be adhered to the fire barrier layer 102 prior to laminating the scrim layer 108 to the second film 110.

Optionally, the assembled fire barrier laminate 16 includes an encapsulating adhesive layer 116 adjacent to the first polymeric film 106 in order to encapsulate the insulation layers 14 between the fire barrier laminate 16 and the inboard film 18. Additionally or alternatively, the fire barrier laminate 16 may utilize mechanical fasteners or tapes for encapsulating the insulating layers 14 between the fire barrier laminate 16 and the inboard film 18.

A detail section of another embodiment of the fire barrier laminate 16, encircled as B' in Fig. 1A is shown in an exploded cross-sectional view in Fig. 1C. The fire barrier laminate 16 is constructed by first applying an adhesive 204 to a first polymeric flame propagation resistant film 206, such as a ethylene chlorotrifluoroethylene film. The fire barrier layer 202 is then coated onto the adhesive 204-coated first polymeric film 206. Alternatively, the adhesive 204 may be omitted, resulting in the fire barrier layer 202 being coated directly onto the first polymeric film 206. The fire barrier layer 202 may comprise a paste or slurry type material with an amount of water or other solvent being present in the fire barrier layer 202 as it is being coated onto the first polymeric film 206. In this instance, the fire barrier layer 202 is allowed to dry before continued processing. Optionally, a water-repellant material may be incorporated in, coated onto or saturated/impregnated into the fire barrier layer 202.

A second film 210, such as a metalized polyetheretherketone film, is laminated to the fire barrier layer 202-coated first polymeric film 206 using an adhesive 212. The fire barrier laminate 16 includes a scrim layer 208 laminated to the first polymeric film 206 opposite the fire barrier layer 202 via an adhesive layer 216.

A detail section of a further embodiment of the fire barrier laminate 16, encircled as B' in Fig. 1A is shown in an exploded cross-sectional view in Fig. ID. The fire barrier laminate 16 is constructed by first applying an adhesive 304 to a first polymeric flame propagation resistant film 306, such as a metalized polyetheretherketone film. The fire barrier layer 302 is then coated onto the adhesive 304-coated first polymeric film 306. Alternatively, the adhesive 304 may be omitted, resulting in the fire barrier layer 302 being coated directly onto the first polymeric film 306. The fire barrier layer 302 may comprise a paste or slurry type material with an amount of water or other solvent being present in the fire barrier layer 302 as it is being coated onto the first polymeric film 306. In this instance, the fire barrier layer 302 is allowed to dry before continued processing. Optionally, a water-repellant material may be incorporated in, coated onto or saturated/impregnated into the fire barrier layer 302.

Separately, a scrim layer 308, such as a fiberglass or nylon scrim, is laminated to a second film 310, such as a polyetheretherketone film. An adhesive 312 is also used to laminate the fire barrier layer 302-coated first polymeric film 306 to the scrim layer 308. Alternatively, the scrim layer 308 may be adhered to the fire barrier layer 302 prior to laminating the scrim layer 308 to the second film 310.

The assembled fire barrier laminate 16 may include an encapsulating adhesive layer 316 adjacent to the first polymeric film 306 in order to encapsulate the insulation layers 14 between the fire barrier laminate 16 and the inboard film 18. A second scrim layer 308a is optionally embedded in the adhesive layer 316.

A detail section of a further embodiment of the fire barrier laminate 16, encircled as B' in Fig. 1A is shown in an exploded cross-sectional view in Fig. IE. The fire barrier laminate 16 is constructed by first applying an adhesive 404 to a first polymeric flame propagation resistant film 406, such as a polyetheretherketone film. A second scrim layer 408a is optionally laminated between the adhesive 404 and the first polymeric film 406. The fire barrier layer 402 is then coated onto the adhesive 404-coated first polymeric film 406. Alternatively, the adhesive 404 may be omitted, resulting in the fire barrier layer 402 being coated directly onto the first polymeric film 406. The fire barrier layer 402 may comprise a paste or slurry type material with an amount of water or other solvent being present in the fire barrier layer 402 as it is being coated onto the first polymeric film 406. In this instance, the fire barrier layer 402 is allowed to dry before continued processing. Optionally, a water-repellant material may be incorporated in, coated onto or saturated/impregnated into the fire barrier layer 402.

A second film 410, such as a metalized polyetheretherketone film, is laminated to the fire barrier layer 402-coated first polymeric film 406 using an adhesive 412. The fire barrier laminate 16 includes a scrim layer 408 laminated to the first polymeric film 406 opposite the fire barrier layer 402 via an adhesive layer 416.

The following examples are set forth merely to further illustrate the subject fire barrier layer and fire barrier film laminate. The illustrative examples should not be construed as limiting the fire barrier layer and/or fire barrier laminate in any manner.

### TEST PROTOCOLS

The fire barrier film laminate-protected thermal/acoustic insulation blankets described above were tested according to the protocols of 14 C.F.R. § 25.856(a) and (b), Appendix F, Parts VI and VII, which are incorporated herein in their entirety, as if fully written out below.

### 14 C.F.R. § 25.856(a) and (b) provide in pertinent part:

### Table 2

### § 25.856 Thermal/Acoustic insulation materials.

(a) Thermal/acoustic insulation material installed in the fuselage must meet the flame propagation test requirements of part VI of Appendix F to this part, or other approved equivalent test requirements.
(b) For airplanes with a passenger capacity of 20 or greater, thermal/acoustic insulation materials (including the means of fastening the materials to the fuselage) installed in the lower half of the airplane fuselage must meet the flame penetration resistance test requirements of part VII of Appendix F to this part, or other approved equivalent test requirements.

### Appendix F Part VI provides, in pertinent part:

### Table 3

Part VI -- Test Method To Determine the Flammability and Flame Propagation Characteristics of Thermal/Acoustic Insulation Materials Use this test method to evaluate the flammability and flame propagation characteristics of thermal/acoustic insulation when exposed to both a radiant heat source and a flame.

### (a) Definitions.

"Flame propagation" means the furthest distance of the propagation of visible flame towards the far end of the test specimen, measured from the midpoint of the ignition source flame. Measure this distance after initially applying the ignition source and before all flame on the test specimen is extinguished. The measurement is not a determination of burn length made after the test.

"Radiant heat source" means an electric or air propane panel. "Thermal/acoustic insulation" means a material or system of materials used to provide thermal and/or acoustic protection. Examples include fiberglass or other batting material encapsulated by a film covering and foams.

"Zero point" means the point of application of the pilot burner to the test specimen.

### (b) Test apparatus.

(4) *Pilot Burner.* The pilot burner used to ignite the specimen must be a Bernzomatic™ commercial propane venturi torch with an axially symmetric burner tip and a propane supply tube with an orifice diameter of 0.006 inches (0.15 mm). The length of the burner tube must be 2 7/8 inches (71 mm). The propane flow must be adjusted via gas pressure through an in-line regulator to produce a blue inner cone length of 3/4 inch (19 mm). A 3/4 inch (19 mm) guide (such as a thin strip of metal) may be soldered to the top of the burner to aid in setting the flame height. The overall flame length must be approximately 5 inches long (127 mm). Provide a way to move the burner out of the ignition position so that the flame is horizontal and at least 2 inches (50 mm) above the specimen plane.
(5) *Thermocouples.* Install a 24 American Wire Gauge (AWG) Type K (Chromel-Alumel) thermocouple in the test chamber for temperature monitoring. Insert it into the chamber through a small hole drilled through the back of the chamber. Place the thermocouple so that it extends 11 inches (279 mm) out from the back of the chamber wall, 11 1/2 inches (292 mm) from the right side of the chamber wall, and is 2 inches (51 mm) below the radiant panel. The use of other thermocouples is optional.
(6) *Calorimeter.* The calorimeter must be a one-inch cylindrical water-cooled, total heat flux density, foil type Gardon Gage that has a range of 0 to 5 BTU/ft²-second (0 to 5.7 Watts/cm²).

### (c) Test specimens.

(1) *Specimen preparation.* Prepare and test a minimum of three test specimens. If an oriented film cover material is used, prepare and test both the warp and fill directions.
(2) *Construction.* Test specimens must include all materials used in construction of the insulation (including batting, film, scrim, tape *etc*.). Cut a piece of core material such as foam or fiberglass, and cut a piece of film cover material (if used) large enough to cover the core material. Heat sealing is the preferred method of preparing fiberglass samples, since they can be made without compressing the fiberglass ("box sample"). Cover materials that are not heat sealable may be stapled, sewn, or taped as long as the cover material is over-cut enough to be drawn down the sides without compressing the core material. The fastening means should be as continuous as possible along the length of the seams. The specimen thickness must be of the same thickness as installed in the airplane.
(3) *Specimen Dimensions.* To facilitate proper placement of specimens in the sliding platform housing, cut non-rigid core materials, such as fiberglass, 12 1/2 inches (318mm) wide by 23 inches (584mm) long. Cut rigid materials, such as foam, 11 1/2 ±1/4 inches (292 mm ±6 mm) wide by 23 inches (584mm) long in order to fit properly in the sliding platform housing and provide a flat, exposed surface equal to the opening in the housing.

### (d) Specimen conditioning. Condition the test specimens at 70 ±5°F (21° ±2°C) and 55% ±10% relative humidity, for a minimum of 24 hours prior to testing.

### (f) Test Procedure.

(1) Ignite the pilot burner. Ensure that it is at least 2 inches (51 mm) above the top of the platform. The burner must not contact the specimen until the test begins.
(2) Place the test specimen in the sliding platform holder. Ensure that the test sample surface is level with the top of the platform. At "zero" point, the specimen surface must be 7 1/2 inches ±1/8 inch (191 mm ±3) below the radiant panel.
(3) Place the retaining/securing frame over the test specimen. It may be necessary (due to compression) to adjust the sample (up or down) in order to maintain the distance from the sample to the radiant panel (7 1/2 inches ±1/8 inch (191 mm±3) at "zero" position). With film/fiberglass assemblies, it is critical to make a slit in the film cover to purge any air inside. This allows the operator to maintain the proper test specimen position (level with the top of the platform) and to allow ventilation of gases during testing. A longitudinal slit, approximately 2 inches (51mm) in length, must be centered 3 inches ±1/2 inch (76mm ±13 mm) from the left flange of the securing frame. A utility knife is acceptable for slitting the film cover.
(4) Immediately push the sliding platform into the chamber and close the bottom door.
(5) Bring the pilot burner flame into contact with the center of the specimen at the "zero" point and simultaneously start the timer. The pilot burner must be at a 27° angle with the sample and be approximately 1/2 inch (12 mm) above the sample. A stop ... allows the operator to position the burner correctly each time.
(6) Leave the burner in position for 15 seconds and then remove to a position at least 2 inches (51 mm) above the specimen.

### (g) Report.

(1) Identify and describe the test specimen.
(2) Report any shrinkage or melting of the test specimen.
(3) Report the flame propagation distance. If this distance is less than 2 inches, report this as a pass (no measurement required).
(4) Report the after-flame time.

### (h) Requirements.

(1) There must be no flame propagation beyond 2 inches (51 mm) to the left of the centerline of the pilot flame application.
(2) The flame time after removal of the pilot burner may not exceed 3 seconds on any specimen.

### Appendix F Part VII provides, in pertinent part:

### Table 4

### Part VII -- Test Method To Determine the Bumthrough Resistance of Thermal/Acoustic Insulation Materials

Use the following test method to evaluate the bumthrough resistance characteristics of aircraft thermal/acoustic insulation materials when exposed to a high intensity open flame. (a) *Definitions.*

*Burnthrough time* means the time, in seconds, for the burner flame to penetrate the test specimen, and/or the time required for the heat flux to reach 2.0 Btu/ft²sec (2.27 W/cm²) on the inboard side, at a distance of 12 inches (30.5 cm) from the front surface of the insulation blanket test frame, whichever is sooner. The burnthrough time is measured at the inboard side of each of the insulation blanket specimens.

*Insulation blanket specimen* means one of two specimens positioned in either side of the test rig, at an angle of 30° with respect to vertical.

*Specimen set* means two insulation blanket specimens. Both specimens must represent the same production insulation blanket construction and materials, proportioned to correspond to the specimen size.

### (b) Apparatus.

### (3) Calibration rig and equipment.

(i) Construct individual calibration rigs to incorporate a calorimeter and thermocouple rake for the measurement of heat flux and temperature. Position the calibration rigs to allow movement of the burner from the test rig position to either the heat flux or temperature position with minimal difficulty.
(ii) *Calorimeter.* The calorimeter must be a total heat flux, foil type Gardon Gage of an appropriate range such as 0-20 Btu/ft²⁻sec (0-22.7 W/cm²), accurate to ±3% of the indicated reading. The heat flux calibration method must be in accordance with paragraph VI(b)(7) of this appendix.
(iv) *Thermocouples.* Provide seven 1/8-inch (3.2 mm) ceramic packed, metal sheathed, type K (Chromel-alumel), grounded junction thermocouples with a nominal 24 American Wire Gauge (AWG) size conductor for calibration. Attach the thermocouples to a steel angle bracket to form a thermocouple rake for placement in the calibration rig during burner calibration.
   (5) *Backface calorimeters.* Mount two total heat flux Gardon type calorimeters behind the insulation test specimens on the back side (cold) area of the test specimen mounting frame. Position the calorimeters along the same plane as the burner cone centerline, at a distance of 4 inches (102 mm) from the vertical centerline of the test frame.
      (i) The calorimeters must be a total heat flux, foil type Gardon Gage of an appropriate range such as 0-5 Btu/ft²-sec (0-5.7 W/cm²), accurate to ±3% of the indicated reading. The heat flux calibration method must comply with paragraph VI(b)(7) of this appendix.
   (6) *Instrumentation.* Provide a recording potentiometer or other suitable calibrated instrument with an appropriate range to measure and record the outputs of the calorimeter and the thermocouples.
   (7) *Timing device.* Provide a stopwatch or other device, accurate to ±1%, to measure the time of application of the burner flame and bumthrough time.

### (c) Test Specimens.

(1) *Specimen preparation.* Prepare a minimum of three specimen sets of the same construction and configuration for testing.
(2) *Insulation blanket test specimen.*
   (i) For batt-type materials such as fiberglass, the constructed, finished blanket specimen assemblies must be 32 inches wide by 36 inches long (81.3 by 91.4 cm), exclusive of heat sealed film edges.
(3) *Construction.* Make each of the specimens tested using the principal components (*i.e*., insulation, fire barrier material if used, and moisture barrier film) and assembly processes (representative seams and closures).
   (i) *Fire barrier material.* If the insulation blanket is constructed with a fire barrier material, place the fire barrier material in a manner reflective of the installed arrangement For example, if the material will be placed on the outboard side of the insulation material, inside the moisture film, place it the same way in the test specimen.
   (v) *Conditioning.* Condition the specimens at 70° ±5°F (21° ±2°C) and 55% ±10% relative humidity for a minimum of 24 hours prior to testing.

### (f) Test procedure.

(1) Secure the two insulation blanket test specimens to the test frame. The insulation blankets should be attached to the test rig center vertical former using four spring clamps .... (according to the criteria of paragraph (c)(4) or (c)(4)(i) of this part of this appendix).
(2) Ensure that the vertical plane of the burner cone is at a distance of 4 ±0.125 inch (102 ±3 mm) from the outer surface of the horizontal stringers of the test specimen frame, and that the burner and test frame are both situated at a 30° angle with respect to vertical.
(3) When ready to begin the test, direct the burner away from the test position to the warm-up position so that the flame will not impinge on the specimens prematurely. Turn on and light the burner and allow it to stabilize for 2 minutes.
(4) To begin the test, rotate the burner into the test position and simultaneously start the timing device.
(5) Expose the test specimens to the burner flame for 4 minutes and then turn off the burner. Immediately rotate the burner out of the test position.
(6) Determine (where applicable) the burnthrough time, or the point at which the heat flux exceeds 2.0 Btu/ft²-sec (2.27 W/cm²).

### (g) Report.

(1) Identify and describe the specimen being tested.
(2) Report the number of insulation blanket specimens tested.
(3) Report the bumthrough time (if any), and the maximum heat flux on the back face of the insulation blanket test specimen, and the time at which the maximum occurred.

### (h) Requirements.

(1) Each of the two insulation blanket test specimens must not allow fire or flame penetration in less than 4 minutes.
(2) Each of the two insulation blanket test specimens must not allow more than 2.0 Btu/ft²-sec (2.27 W/cm²) on the cold side of the insulation specimens at a point 12 inches (30.5 cm) from the face of the test rig.

In a first embodiment, a subject fire barrier laminate may comprise: at least one fire barrier layer directly or indirectly coated onto at least one first polymeric flame propagation resistant film layer; at least one second film layer proximate to the fire barrier layer opposite the first polymeric flame propagation resistant film layer; at least one scrim layer disposed: (i) between the fire barrier layer and the first polymeric flame propagation resistant film layer; and/or (ii) between the fire barrier layer and the second film layer; and/or (iii) proximate to the first polymeric flame propagation resistant film layer opposite the fire barrier layer; and/or (iv) proximate to the second film layer opposite the fire barrier layer; optionally, a water-repellant material incorporated into and/or applied to the fire barrier layer; optionally at least one adhesive layer adhering the fire barrier layer to the first polymeric flame propagation resistant film layer; and optionally at least one adhesive layer adhering the scrim layer to at least one of the fire barrier layer, the first polymeric flame propagation resistant film layer, or the second film layer; wherein the fire barrier layer comprises inorganic fibers, at least one inorganic platelet material, optionally at least one organic binder and/or inorganic binder, and optionally at least one functional filler.

The fire barrier laminate of the first embodiment may further include that the inorganic platelet material comprises at least one of vermiculite, mica, clay or talc. The vermiculite may be exfoliated and optionally defoliated. The clay may comprise at least one of ball clay, bentonite, smectite, hectorite, kaolinite, montmorillonite, saponite, sepiolite or sauconite.

The fire barrier laminate of either or both of the first or subsequent embodiments may further include that the organic binder comprises at least one of acrylic latex, (meth)acrylic latex, phenolic resins, copolymers of styrene and butadiene, vinylpyridine, acrylonitrile, copolymers of acrylonitrile and styrene, vinyl chloride, polyurethane, copolymers of vinyl acetate and ethylene, polyamides, silicones, unsaturated polyesters, epoxy resins or polyvinyl esters.

The fire barrier laminate of any of the first or subsequent embodiments may further include that the inorganic binder comprises at least one of colloidal alumina, colloidal silica or colloidal zirconia.

The fire barrier laminate of any of the first or subsequent embodiments may further include that the fire barrier layer comprises from about 2% to about 50% by weight of the inorganic fibers, from about 20% to about 98% by weight of the inorganic platelet material, from 0% to about 40% by weight of the organic binder and/or inorganic binder, and from 0% to about 50% of the functional filler.

The fire barrier laminate of any of the first or subsequent embodiments may further include that the fire barrier layer comprises from about 2% to about 40% of the inorganic fibers, from about 60% to about 98% by weight of the inorganic platelet material, from 0% to about 20% by weight of the organic binder and/or inorganic binder, and from 0% to about 20% of the functional filler.

The fire barrier laminate of any of the first or subsequent embodiments may further include that the fire barrier layer comprises from about 2% to about 30% by weight of the inorganic fibers, from about 20% to about 98% by weight of the inorganic platelet material, from 0% to about 40% by weight of the organic binder and/or inorganic binder, and from 0% to about 50% of the functional filler.

The fire barrier laminate of any of the first or subsequent embodiments may further include that the fire barrier layer comprises from about 2% to about 20% by weight of the inorganic fibers, from about 20% to about 98% by weight of the inorganic platelet material, from 0% to about 40% by weight of the organic binder and/or inorganic binder, and from 0% to about 50% of the functional filler.

The fire barrier laminate of any of the first or subsequent embodiments may further include that the fire barrier layer comprises from about 2% to about 10% by weight of the inorganic fibers, from about 20% to about 98% by weight of the inorganic platelet material, from 0% to about 40% by weight of the organic binder and/or inorganic binder, and from 0% to about 50% of the functional filler.

The fire barrier laminate of any of the first or subsequent embodiments may further include that either or both of the first polymeric flame propagation resistant film layer or the second film layer comprises at least one of polyesters, polyimides, polyetherketones, polyetheretherketones, polyvinylfluorides, polyamides, polytetrafluoroethylenes, polyaryl sulfones, polyester amides, polyester imides, polyethersulfones, polyphenylene sulfides, or combinations thereof.

The fire barrier laminate of any of the first or subsequent embodiments may further include that the at least one scrim layer comprises at least one of fiberglass, nylon, polyester, aramid, or high or ultra-high molecular weight polyethylene.

The fire barrier laminate of any of the first or subsequent embodiments may further include that either or both of the first polymeric flame propagation resistant film layer and the second film layer are metalized. Either or both of the first polymeric flame propagation resistant film layer or the second film layer have an opaque, low-gloss polymer coating, optionally including a fire retardant additive.

The fire barrier laminate of any of the first or subsequent embodiments may have a basis weight of less than about 120 gsm.

In a second embodiment, a subject thermal acoustic insulation system may comprise a plurality of insulating layers disposed within a covering of an exteriorly facing fire barrier laminate as in any of the first or subsequent embodiments, and an interiorly facing inboard cover film.

The thermal acoustic insulation system of the second embodiment may further include that the interiorly facing cover film also comprises the fire barrier laminate of the first or subsequent embodiments.

The thermal acoustic insulation system of either or both of the second or subsequent embodiments may further include that the exteriorly facing fire barrier laminate and the interiorly facing inboard cover film are sealed with an adhesive to partially or substantially totally envelop or encapsulate the plurality of insulating layers.

The thermal acoustic insulation system of any of the second or subsequent embodiments may further include that the insulating layers comprise fiberglass insulation and/or polyimide foam insulation.

The thermal acoustic insulation system of any of the second or subsequent embodiments may be capable of passing the flame propagation and burn-through resistance test protocols of 14 C.F.R. § 25.856(a) and (b), Appendix F, Parts VI and VII.

In a third embodiment, a subject method of making a fire barrier laminate may comprise: directly or indirectly coating at least one fire barrier layer onto a first polymeric flame propagation resistant film layer; laminating the fire barrier layer with at least one second film layer, wherein the second film layer is proximate to the fire barrier layer; and laminating at least one scrim layer within the fire barrier laminate, wherein the at least one scrim layer is disposed: (i) between the fire barrier layer and the first polymeric flame propagation resistant film layer; and/or (ii) between the fire barrier layer and the second film layer; and/or (iii) proximate to the first polymeric flame propagation resistant film layer opposite the fire barrier layer; and/or (iv) proximate to the second film layer opposite the fire barrier layer; wherein the fire barrier layer comprises inorganic fibers, at least one inorganic platelet material, optionally at least one organic binder and/or inorganic binder, and optionally at least one functional filler; and wherein the fire barrier layer optionally contains a water repellant material, and/or the method further comprises optionally coating and/or saturating the fire barrier layer with a water repellant material.

The method of the third embodiment may further include that the inorganic platelet material comprises at least one of vermiculite, mica, clay or talc. The vermiculite may be exfoliated and optionally defoliated.

The method of either or both of the third or subsequent embodiments may further include that the organic binder comprises at least one of acrylic latex, (meth)acrylic latex, phenolic resins, copolymers of styrene and butadiene, vinylpyridine, acrylonitrile, copolymers of acrylonitrile and styrene, vinyl chloride, polyurethane, copolymers of vinyl acetate and ethylene, polyamides, silicones, unsaturated polyesters, epoxy resins or polyvinyl esters.

The method of any of the third or subsequent embodiments may further include that the inorganic binder comprises at least one of colloidal alumina, colloidal silica or colloidal zirconia.

The method of any of the third or subsequent embodiments may further include that the fire barrier layer comprises from about 2% to about 50% by weight of the inorganic fibers, from about 20% to about 98% by weight of the inorganic platelet material, from 0% to about 40% by weight of the organic binder and/or inorganic binder, and from 0% to about 50% of the functional filler.

The method of any of the third or subsequent embodiments may further include that the fire barrier layer comprises from about 2% to about 40% by weight of the inorganic fibers, from about 20% to about 98% by weight of the inorganic platelet material, from 0% to about 40% by weight of the organic binder and/or inorganic binder, and from 0% to about 50% of the functional filler.

The method of any of the third or subsequent embodiments may further include that the fire barrier layer comprises from about 2% to about 30% by weight of the inorganic fibers, from about 20% to about 98% by weight of the inorganic platelet material, from 0% to about 40% by weight of the organic binder and/or inorganic binder, and from 0% to about 50% of the functional filler.

The method of any of the third or subsequent embodiments may further include that the fire barrier layer comprises from about 2% to about 20% by weight of the inorganic fibers, from about 20% to about 98% by weight of the inorganic platelet material, from 0% to about 40% by weight of the organic binder and/or inorganic binder, and from 0% to about 50% of the functional filler.

The method of any of the third or subsequent embodiments may further include that the fire barrier layer comprises from about 2% to about 10% by weight of the inorganic fibers, from about 20% to about 98% by weight of the inorganic platelet material, from 0% to about 40% by weight of the organic binder and/or inorganic binder, and from 0% to about 50% of the functional filler.

The method of any of the third or subsequent embodiments may further include that either or both of the first polymeric flame propagation resistant film layer or the second film layer comprises at least one of polyesters, polyimides, polyetherketones, polyetheretherketones, polyvinylfluorides, polyamides, polytetrafluoroethylenes, polyaryl sulfones, polyester amides, polyester imides, polyethersulfones, polyphenylene sulfides, or combinations thereof.

The method of any of the third or subsequent embodiments may further include that the at least one scrim layer comprises at least one of fiberglass, nylon, polyester, aramid, or high or ultra-high molecular weight polyethylene.

The method of any of the third or subsequent embodiments may further include that either or both of the first polymeric flame propagation resistant film layer or the second film layer are metalized. Either or both of the first polymeric flame propagation resistant film layer or the second film layer may be coated with an opaque, low-gloss polymer, optionally including a fire retardant additive.

It will be understood that the embodiments described herein are merely exemplary, and that one skilled in the art may make variations and modifications without departing from the spirit and scope of the invention. Further, all embodiments disclosed are not necessarily in the alternative, as various embodiments of the invention may be combined to provide the desired result.

## Claims

1. A fire barrier laminate comprising:
at least one fire barrier layer directly or indirectly coated onto at least one first polymeric flame propagation resistant film layer;
at least one second film layer proximate to the fire barrier layer opposite the first polymeric flame propagation resistant film layer;
at least one scrim layer disposed: (i) between the fire barrier layer and the first polymeric flame propagation resistant film layer; and/or (ii) between the fire barrier layer and the second film layer; and/or (iii) proximate to the first polymeric flame propagation resistant film layer opposite the fire barrier layer; and/or (iv) proximate to the second film layer opposite the fire barrier layer;
optionally, a water-repellant material incorporated into and/or applied to the fire barrier layer;
optionally at least one adhesive layer adhering the fire barrier layer to the first polymeric flame propagation resistant film layer; and
optionally at least one adhesive layer adhering the scrim layer to at least one of the fire barrier layer, the first polymeric flame propagation resistant film layer, or the second film layer;
wherein the fire barrier layer comprises from about 2% to about 50% by weight inorganic fibers based on the total weight of the fire barrier layer, at least one inorganic platelet material, optionally at least one organic binder and/or inorganic binder, and optionally at least one functional filler.

2. The fire barrier laminate of claim 1, wherein the inorganic platelet material comprises at least one of vermiculite, mica, clay or talc.

3. The fire barrier laminate of claim 2, wherein the vermiculite is exfoliated and optionally defoliated.

4. The fire barrier laminate of claim 2, wherein the clay comprises at least one of ball clay, bentonite, smectite, hectorite, kaolinite, montmorillonite, saponite, sepiolite or sauconite.

5. The fire barrier laminate of claim 1, wherein the organic binder comprises at least one of acrylic latex, (meth)acrylic latex, phenolic resins, copolymers of styrene and butadiene, vinylpyridine, acrylonitrile, copolymers of acrylonitrile and styrene, vinyl chloride, polyurethane, copolymers of vinyl acetate and ethylene, polyamides, silicones, unsaturated polyesters, epoxy resins or polyvinyl esters.

6. The fire barrier laminate of claim 1, wherein the inorganic binder comprises at least one of colloidal alumina, colloidal silica or colloidal zirconia.

7. The fire barrier laminate of claim 1, wherein the fire barrier layer comprises from about 20% to about 98% by weight of the inorganic platelet material, from 0% to about 40% by weight of the organic binder and/or inorganic binder, and from 0% to about 50% of the functional filler.

8. The fire barrier laminate of claim 1, wherein the fire barrier layer comprises from about 2% to about 10% of the inorganic fibers, from about 60% to about 98% by weight of the inorganic platelet material, from 0% to about 20% by weight of the organic binder and/or inorganic binder, and from 0% to about 20% of the functional filler.

9. The fire barrier laminate of claim 1, wherein either or both of the first polymeric flame propagation resistant film layer or the second film layer comprises at least one of polyesters, polyimides, polyetherketones, polyetheretherketones, polyvinylfluorides, polyamides, polytetrafluoroethylenes, polyaryl sulfones, polyester amides, polyester imides, polyethersulfones, polyphenylene sulfides, or combinations thereof.

10. The fire barrier laminate of claim 1, wherein the at least one scrim layer comprises at least one of fiberglass, nylon, polyester, aramid, or high or ultra-high molecular weight polyethylene.

11. The fire barrier laminate of claim 1, wherein either or both of the first polymeric flame propagation resistant film layer and the second film layer are metalized.

12. The fire barrier laminate of claim 11, wherein either or both of the first polymeric flame propagation resistant film layer or the second film layer have an opaque, low-gloss polymer coating, optionally including a fire retardant additive.

13. The fire barrier laminate of claim 1 having a basis weight of less than about 120 gsm.

14. A thermal acoustic insulation system comprising a plurality of insulating layers disposed within a covering of an exteriorly facing fire barrier laminate as in any one of claims 1 to 13, and an interiorly facing inboard cover film.

15. A method of making the fire barrier laminate of any one of claims 1-13 comprising:
directly or indirectly coating at least one fire barrier layer onto a first polymeric flame propagation resistant film layer;
laminating the fire barrier layer with at least one second film layer, wherein the second film layer is proximate to the fire barrier layer; and
laminating at least one scrim layer with the fire barrier laminate, wherein the at least one scrim layer is disposed: (i) between the fire barrier layer and the first polymeric flame propagation resistant film layer; and/or (ii) between the fire barrier layer and the second film layer; and/or (iii) proximate to the first polymeric flame propagation resistant film layer opposite the fire barrier layer; and/or (iv) proximate to the second film layer opposite the fire barrier layer;
wherein the fire barrier layer comprises from about 2% to about 50% by weight inorganic fibers based on the total weight of the fire barrier layer, at least one inorganic platelet material, optionally at least one organic binder and/or inorganic binder, and optionally at least one functional filler; and
wherein the fire barrier layer optionally contains a water-repellant material, and/or the method further comprises optionally coating and/or saturating the fire barrier layer with a water-repellant material.

## Patentansprüche

1. Brandschutzlaminat, umfassend:
zumindest eine Brandschutzschicht, die direkt oder indirekt auf zumindest eine erste polymere flammenausbreitungsbeständige Filmschicht geschichtet ist;
zumindest eine zweite Filmschicht, die auf die Brandschutzschicht folgt, die der ersten polymeren flammenausbreitungsbeständigen Filmschicht gegenüberliegt;
zumindest eine Gewebeverstärkungsschicht, angeordnet: (i) zwischen der Brandschutzschicht und der ersten polymeren flammenausbreitungsbeständigen Filmschicht; und/oder (ii) zwischen der Brandschutzschicht und der zweiten Filmschicht; und/oder (iii) folgend auf die erste polymere flammenausbreitungsbeständige Filmschicht, die der Brandschutzschicht gegenüberliegt; und/oder (iv) folgend auf die zweite Filmschicht, die der Brandschutzschicht gegenüberliegt;
gegebenenfalls ein wasserabweisendes Material, das in die Brandschutzschicht integriert und/oder auf diese aufgebracht ist;
gegebenenfalls zumindest eine Haftschicht, mit der die Brandschutzschicht an die erste polymere flammenausbreitungsbeständige Filmschicht geklebt wird; und
gegebenenfalls zumindest eine Haftschicht, mit der die Gewebeverstärkungsschicht an zumindest eine der Brandschutzschicht, der ersten polymeren flammenausbreitungsbeständigen Filmschicht oder der zweiten Filmschicht geklebt wird;
wobei die Brandschutzschicht etwa 2 % bis etwa 50 %, bezogen auf das Gewicht, anorganische Fasern, basierend auf dem Gesamtgewicht der Brandschutzschicht, zumindest ein anorganisches Plättchenmaterial, gegebenenfalls zumindest ein organisches Bindemittel und/oder anorganisches Bindemittel und gegebenenfalls zumindest einen Funktionsfullstoff umfasst.

2. Brandschutzlaminat nach Anspruch 1, wobei das anorganische Plättchenmaterial zumindest eines von Vermiculit, Glimmer, Ton oder Talk umfasst.

3. Brandschutzlaminat nach Anspruch 2, wobei der Vermiculit expandiert und gegebenenfalls gebläht ist.

4. Brandschutzlaminat nach Anspruch 2, wobei der Ton zumindest eines von Ball Clay, Bentonit, Smektit, Hektorit, Kaolinit, Montmorillonit, Saponit, Sepiolit oder Saukonit umfasst.

5. Brandschutzlaminat nach Anspruch 1, wobei das organische Bindemittel zumindest eines von Acryllatex, (Meth)acryllatex, Phenolharzen, Copolymeren von Styrol und Butadien, Vinylpyridin, Acrylnitril, Copolymeren von Acrylnitril und Styrol, Vinylchlorid, Polyurethan, Copolymeren von Vinylacetat und Ethylen, Polyamiden, Siliconen, ungesättigten Polyestern, Epoxidharzen oder Polyvinylestern umfasst.

6. Brandschutzlaminat nach Anspruch 1, wobei das anorganische Bindemittel zumindest eines von kolloidalem Aluminiumoxid, kolloidalem Siliciumdioxid oder kolloidalem Zirconiumdioxid umfasst.

7. Brandschutzlaminat nach Anspruch 1, wobei die Brandschutzschicht etwa 20 % bis etwa 98 %, bezogen auf das Gewicht, des anorganischen Plättchenmaterials, 0 % bis etwa 40 %, bezogen auf das Gewicht, des organischen Bindemittels und/oder anorganischen Bindemittels und 0 % bis etwa 50 % des Funktionsfüllstoffs umfasst.

8. Brandschutzlaminat nach Anspruch 1, wobei die Brandschutzschicht etwa 2 % bis etwa 10 % der anorganischen Fasern, etwa 60 % bis etwa 98 %, bezogen auf das Gewicht, des anorganischen Plättchenmaterials, 0 % bis etwa 20 %, bezogen auf das Gewicht, des organischen Bindemittels und/oder anorganischen Bindemittels und 0 % bis etwa 20 % des Funktionsfüllstoffs umfasst.

9. Brandschutzlaminat nach Anspruch 1, wobei eine oder beide der ersten polymeren flammenausbreitungsbeständigen Filmschicht oder der zweiten Filmschicht zumindest eines von Polyestern, Polyimiden, Polyetherketonen, Polyetheretherketonen, Polyvinylfluoriden, Polyamiden, Polytetrafluorethylenen, Polyarylsulfonen, Polyesteramiden, Polyesterimiden, Polyethersulfonen, Polyphenylensulfiden oder Kombinationen davon umfassen.

10. Brandschutzlaminat nach Anspruch 1, wobei die zumindest eine Gewebeverstärkungsschicht zumindest eines von Fiberglas, Nylon, Polyester, Aramid oder Polyethylen mit hohem oder ultrahohem Molekulargewicht umfasst.

11. Brandschutzlaminat nach Anspruch 1, wobei eine oder beide der ersten polymeren flammenausbreitungsbeständigen Filmschicht und der zweiten Filmschicht metallisiert sind.

12. Brandschutzlaminat nach Anspruch 11, wobei eine oder beide der ersten polymeren flammenausbreitungsbeständigen Filmschicht oder der zweiten Filmschicht eine opake Polymerbeschichtung mit geringem Glanz umfassen, die gegebenenfalls ein feuerhemmendes Additiv umfasst.

13. Brandschutzlaminat nach Anspruch 1 mit einem Flächengewicht von weniger als etwa 120 g/m².

14. Thermisches Schalldämmungssystem, umfassend mehrere Isolierschichten, angeordnet innerhalb einer Verkleidung aus einem nach außen zeigenden Brandschutzlaminat nach einem der Ansprüche 1 bis 13 und einer nach innen zeigenden innenliegenden Schutzschicht.

15. Verfahren zur Herstellung des Brandschutzlaminats nach einem der Ansprüche 1 - 13, umfassend:
das direkte oder indirekte Schichten zumindest einer Brandschutzschicht auf eine erste polymere flammenausbreitungsbeständige Filmschicht;
das Laminieren der Brandschutzschicht mit zumindest einer zweiten Filmschicht, wobei die zweite Filmschicht auf die Brandschutzschicht folgt; und
das Laminieren zumindest einer Gewebeverstärkungsschicht mit dem Brandschutzlaminat, wobei die zumindest eine Gewebeverstärkungsschicht angeordnet ist: (i) zwischen der Brandschutzschicht und der ersten polymeren flammenausbreitungsbeständigen Filmschicht; und/oder (ii) zwischen der Brandschutzschicht und der zweiten Filmschicht; und/oder (iii) folgend auf die erste polymere flammenausbreitungsbeständige Filmschicht, die der Brandschutzschicht gegenüberliegt; und/oder (iv) folgend auf die zweite Filmschicht, die der Brandschutzschicht gegenüberliegt;
wobei die Brandschutzschicht etwa 2 % bis etwa 50 %, bezogen auf das Gewicht, anorganische Fasern, basierend auf dem Gesamtgewicht der Brandschutzschicht, zumindest ein anorganisches Plättchenmaterial, gegebenenfalls zumindest ein organisches Bindemittel und/oder anorganisches Bindemittel und gegebenenfalls zumindest einen Funktionsfüllstoff umfasst; und
wobei die Brandschutzschicht gegebenenfalls ein wasserabweisendes Material enthält, und/oder das Verfahren ferner gegebenenfalls das Beschichten und/oder Sättigen der Brandschutzschicht mit einem wasserabweisenden Material umfasst.

## Revendications

1. Stratifié coupe-feu comprenant :
au moins une couche coupe-feu appliquée en revêtement directement ou indirectement sur au moins une première couche de film polymère résistante à la propagation des flammes ;
au moins une seconde couche de film à proximité de la couche coupe-feu opposée à la première couche de film polymère résistante à la propagation des flammes ;
au moins une couche canevas disposée : (i) entre la couche coupe-feu et la première couche de film polymère résistante à la propagation des flammes ; et/ou (ii) entre la couche coupe-feu et la seconde couche de film ; et/ou (iii) à proximité de la première couche de film polymère résistante à la propagation des flammes opposée à la couche coupe-feu ; et/ou (iv) à proximité de la seconde couche de film opposée à la couche coupe-feu ;
facultativement, une matière hydrofuge incorporée dans la couche coupe-feu et/ou appliquée sur celle-ci ;
facultativement au moins une couche adhésive faisant adhérer la couche coupe-feu à la première couche de film polymère résistante à la propagation des flammes ; et
facultativement au moins une couche adhésive faisant adhérer la couche canevas à au moins une couche, la couche coupe-feu, la première couche de film polymère résistante à la propagation des flammes ou la seconde couche de film ;
dans lequel la couche coupe-feu comprend d'environ 2 % à environ 50 % en poids de fibres inorganiques par rapport au poids total de la couche coupe-feu, au moins une matière lamellaire inorganique, facultativement au moins un liant organique et/ou un liant inorganique, et facultativement au moins une charge fonctionnelle.

2. Stratifié coupe-feu selon la revendication 1, dans lequel la matière lamellaire inorganique comprend au moins une matière parmi la vermiculite, le mica, l'argile ou le talc.

3. Stratifié coupe-feu selon la revendication 2, dans lequel la vermiculite est exfoliée et facultativement défoliée.

4. Stratifié coupe-feu selon la revendication 2, dans lequel l'argile comprend au moins une matière parmi l'argile plastique, la bentonite, la smectite, l'hectorite, la kaolinite, la montmorillonite, la saponite, la sépiolite ou la sauconite.

5. Stratifié coupe-feu selon la revendication 1, dans lequel le liant organique comprend au moins un élément parmi du latex acrylique, du latex (méth)acrylique, des résines phénoliques, des copolymères de styrène et de butadiène, de la vinylpyridine, de l'acrylonitrile, des copolymères d'acrylonitrile et de styrène, du chlorure de vinyle, du polyuréthane, des copolymères d'acétate de vinyle et d'éthylène, des polyamides, des silicones, des polyesters non saturés, des résines époxy ou des poly(esters de vinyle).

6. Stratifié coupe-feu selon la revendication 1, dans lequel le liant inorganique comprend au moins un élément parmi l'alumine colloïdale, la silice colloïdale ou de la zircone colloïdale.

7. Stratifié coupe-feu selon la revendication 1, dans lequel la couche coupe-feu comprend d'environ 20 % à environ 98 % en poids de la matière lamellaire inorganique, de 0 % à environ 40 % en poids du liant organique et/ou du liant inorganique, et de 0 % à environ 50 % de la charge fonctionnelle.

8. Stratifié coupe-feu selon la revendication 1, dans lequel la couche coupe-feu comprend d'environ 2 % à environ 10 % des fibres inorganiques, d'environ 60 % à environ 98 % en poids de la matière lamellaire inorganique, de 0 % à environ 20 % en poids du liant organique et/ou du liant inorganique, et de 0 % à environ 20 % de la charge fonctionnelle.

9. Stratifié coupe-feu selon la revendication 1, dans lequel l'une ou l'autre de la première couche de film polymère résistante à la propagation des flammes ou de la seconde couche de film, ou les deux, comprennent au moins un élément parmi des polyesters, des polyimides, des polyéthercétones, des polyétheréthercétones, des poly(fluorures de vinyle), des polyamides, des polytétrafluoroéthylènes, des polyarylsulfones, des polyesteramides, des polyesterimides, des polyéthersulfones, des poly(sulfures de phénylène), ou des mélanges de ceux-ci.

10. Stratifié coupe-feu selon la revendication 1, dans lequel l'au moins une couche canevas comprend au moins un élément parmi de la fibre de verre, du nylon, du polyester, de l'aramide, ou du polyéthylène à masse moléculaire élevée ou ultra-élevée.

11. Stratifié coupe-feu selon la revendication 1, dans lequel l'une ou l'autre de la première couche de film polymère résistante à la propagation des flammes et de la seconde couche de film, ou les deux, sont métallisées.

12. Stratifié coupe-feu selon la revendication 11, dans lequel l'une ou l'autre de la première couche de film polymère résistante à la propagation des flammes et de la seconde couche de film, ou les deux, ont un revêtement polymère opaque et faiblement brillant, comportant facultativement un adjuvant ignifuge.

13. Stratifié coupe-feu selon la revendication 1 ayant une masse surfacique inférieure à environ 120 g/m².

14. Système d'isolation acoustique comprenant une pluralité de couches isolantes disposées à l'intérieur d'un revêtement d'un stratifié coupe-feu orienté vers l'extérieur selon l'une quelconque des revendications 1 à 13, et un film de revêtement interne orienté vers l'intérieur.

15. Procédé de fabrication du stratifié coupe-feu selon l'une quelconque des revendications 1 à 13 comprenant :
l'application en revêtement, directement ou indirectement, d'au moins une couche coupe-feu sur une première couche de film polymère résistante à la propagation des flammes ;
la stratification d'au moins une seconde couche de film sur la couche coupe-feu, la seconde couche de film étant à proximité de la couche coupe-feu ; et
la stratification d'au moins une couche canevas sur le stratifié coupe-feu, l'au moins une couche canevas étant disposée : (i) entre la couche coupe-feu et la première couche de film polymère résistante à la propagation des flammes ; et/ou (ii) entre la couche coupe-feu et la seconde couche de film ; et/ou (iii) à proximité de la première couche de film polymère résistante à la propagation des flammes opposée à la couche coupe-feu ; et/ou (iv) à proximité de la seconde couche de film opposée à la couche coupe-feu ;
dans lequel la couche coupe-feu comprend d'environ 2 % à environ 50 % en poids de fibres inorganiques par rapport au poids total de la couche coupe-feu, au moins une matière lamellaire inorganique, facultativement au moins un liant organique et/ou un liant inorganique, et facultativement au moins one charge fonctionnelle ; et
dans lequel la couche coupe-feu contient facultativement une matière hydrofuge, et/ou le procédé comprend en outre facultativement l'application en revêtement d'une matière hydrofuge sur la couche coupe-feu et/ou la saturation de la couche coupe-feu par la matière hydrofuge.
